# EUROPÄISCHE PATENTSCHRIFT

(11) **EP 2 837 281 B1**
(45) Veröffentlichungstag und Bekanntmachung des Hinweises auf die Patenterteilung: **13.07.2016**
(21) Anmeldenummer: 14169081.8
(22) Anmeldetag: 20.05.2014
(51) Int. Cl.: A01F 15/14

(54) **Knoter für eine Ballenpresse**
Knotter for a baling press
Dispositif noueur pour une presse à balles

(30) Priorität: 14.08.2013 DE 102013013468
(43) Veröffentlichungstag der Anmeldung: 18.02.2015
(73) Patentinhaber: Usines CLAAS France, 57141 Metz (FR)
(72) Erfinder: Scharf, Thorsten, 66693 Orscholz (DE); Waechter, Julien, 57640 Failly (FR); Brucker, Martin, 86630 Pfullendorf (DE)
(74) Vertreter: Budach, Steffen

(56) Entgegenhaltungen:
- WO-A1-99/61805
- DE-U1- 29 502 198
- Weyrich, Michael: "Überblick zu unterschiedlichen Funktionsprinzipien für Sensoren zur Abstandsmessung für die Fertigungsautomatisierung", , 13. Februar 2013 (2013-02-13), XP009181130, Gefunden im Internet: URL:https://wiki.zimt.uni-siegen.de/fertig ungsautomatisierung/index.php/%C3%9Cberbli ck_zu_unterschiedlichen_Funktionsprinzipie n_f%C3%BCr_Sensoren_zur_Abstandsmessung_f% C3%BCr_die_Fertigungsautomatisierung [gefunden am 2014-11-06]

## Beschreibung

Die vorliegende Erfindung betrifft einen Knoter sowie eine landwirtschaftliche Ballenpresse, in der ein solcher Knoter verwendet wird.

Das vom Knoter einer Ballenpresse verwendete Bindegarn ist während des Formens des Ballens und insbesondere während des Verknotens einer beträchtlichen Spannung ausgesetzt. Diese Spannung kann zu einem vollständigen Garnabriss führen; es kann auch vorkommen, dass nur einzelne Fasern des Garns reißen und das Garn sich daraufhin lokal so stark dehnt, dass die Spannung für einen vollständigen Garnriss nicht mehr ausreicht. In beiden Fällen kann es vorkommen, dass ein am Knoterhaken des Knoters gebildeter Knoten nicht abgestreift wird. Wenn ein solcher Knoterhaken weiter betrieben wird, bleiben häufig weitere Knoten daran hängen, so dass, wenn die Störung bemerkt wird, häufig bereits eine große Menge Garn am Knoterhaken aufgewickelt ist und nur mit erheblichem Zeitaufwand wieder beseitigt werden kann. Die an dem blockierten Knoterhaken auftretenden Kräfte können auch zu Verbiegungen oder anderen mechanischen Schäden führen, zu deren Beseitigung auf jeden Fall eine längere Arbeitsunterbrechung, ungünstigenfalls auch ein Werkstattbesuch, erforderlich ist.

Aus DE 295 02 198 U1 ist eine Knüpferüberwachungseinrichtung mit einem bei einer Auslenkung einer Knüpferzunge relativ zu einem Knüpferhaken ansprechenden Sensor bekannt.

Aufgabe der vorliegenden Erfindung ist, einen Knoter zu schaffen, bei dem die Gefahr einer Beschädigung durch fehlerhafte Garnbewegung verringert ist.

Die Aufgabe wird gelöst, indem an einem Knoter mit wenigstens einem um eine Achse drehbaren Knoterhaken, der einen Knoterbock und eine zum Klemmen von Bindegarn gegen den Knoterbock bewegliche Knoterzunge umfasst, ein die Position der Knoterzunge relativ zum Knoterbock überwachender Sensor vorgesehen ist. Gegen Ende eines ordnungsgemäßen Knotvorgangs muss die Knoterzunge sich vom Knoterbock wegbewegen, um zwischen beiden geklemmtes Garn freizugeben, so dass der erzeugte Knoten sich vom Knoter entfernen kann. Unterbleibt eine solche Bewegung, dann ist dies in der Regel darauf zurückzuführen, dass während des Knotvorgangs um Knoterzunge und Knoterbock herumgeschlungene Garnstränge nicht ordnungsgemäß vom Knoterhaken abgeglitten sind und die Bewegung der Knoterzunge blockieren. Das Unterbleiben der Öffnungsbewegung ist daher ein zuverlässiges Indiz für eine Knoterstörung.

Ein von Knoterbock und Knoterzunge begrenzter Klemmspalt ist vorzugsweise in einem zur Achse benachbarten Bereich breiter als in einem von der Achse entfernten Bereich. Während der Knotenbildung in dem achsnahen Bereich des Klemmspalts gehaltene Garnstränge müssen, wenn sich der Knoten vom Knoterhaken löst, den achsfernen Bereich passieren. Indem dieser enger gemacht ist als der achsnahe Bereich, erzwingt der Durchgang der Garnstränge durch den achsfernen Bereich eine Ausweichbewegung der Knoterzunge, die durch den Sensor erfassbar ist.

Der Sensor ist vorzugsweise an einem Chassis des Knoters, an dem der Knoterhaken drehbar gelagert ist, drehfest montiert. Dadurch, dass der Sensor der Drehung des Knoterhakens nicht folgt, ist die Ableitung eines Ausgangssignals vom Sensor vereinfacht.

Erfindungsgemäß ist der Sensor mechanisch an die Knoterzunge gekoppelt.

Der Knoterzunge ist eine Feder zugeordnet, deren Rückstellkraft die Knoterzunge gegen den Knoterbock beaufschlagt. Die Rückstellkraft dieser Feder nimmt zu, wenn sich die Knoterzunge zum Freigeben des geklemmten Garns vom Knoterbock entfernen muss. Daher ist die Bewegung der Knoterzunge einfach und zuverlässig mit Hilfe eines Kraftsensors erfassbar, der der Rückstellkraft der Feder ausgesetzt ist.

Die Feder ist vorzugsweise drehfest angeordnet und nur in einer Ruheorientierung des Knoterhakens an die Knoterzunge gekoppelt.

Eine Auswerteschaltung kann mit dem Sensor verbunden sein, um ein eine Fehlknotung anzeigendes Ausgangssignal zu liefern.

Eine solche Auswerteschaltung kann einen Eingang für ein die Stellung einer Antriebswelle des Knoters anzeigendes Signal haben, um anhand dieses Signals die Phase des Knotvorgangs identifizieren zu können, in der bei korrektem Ablauf die Knoterzunge vom Knoterbock abrücken müsste.

Wenn die Auswerteschaltung mit den Sensoren mehrerer Knoterhaken verbunden ist, kann sie eine Fehlknotung auch an Hand eines Vergleichs der Signale der mehreren Sensoren feststellen.

Gegenstand der Erfindung ist ferner eine Ballenpresse, insbesondere eine Quaderballenpresse, mit wenigstens einem Knoter wie oben beschrieben.

Die Ballenpresse kann ein Anzeigeinstrument für das Ausgangssignal der Auswerteschaltung aufweisen, um gegebenenfalls einen Benutzer darauf hinzuweisen, dass der Pressbetrieb unterbrochen und eine Störung am Knoter beseitig werden sollte. Es kann aber auch eine Steuereinrichtung vorgesehen sein, um einen Antrieb der Ballenpresse in Abhängigkeit von dem Ausgangssignal zu unterbrechen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen Knoter einer Quaderballenpresse unmittelbar zu Beginn eines Knotvorgangs;
- Fig. 2: eine einsetzende Drehung des Knoterhakens;
- Fig. 3: eine nahezu beendete Drehung des Knoterhakens
- Fig. 4: den Knoterhaken unmittelbar vor dem Abstreifen des Knotens;
- Fig. 5: einen schematischen Schnitt durch den Knoter in der Phase der Fig. 4;
- Fig. 6: einen schematischen Schnitt durch den Knoter während des Abstreifens des Knotens; und
- Fig. 7: ein Zeitdiagramm der von einem Sensor des Knoters im Verlauf eines Knotvorgangs erfassten Kraft.

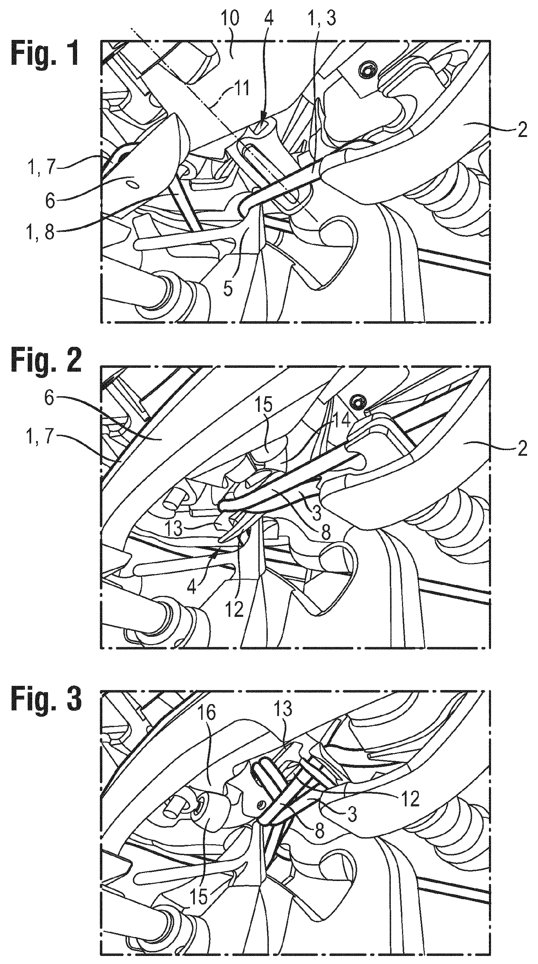

Fig. 1 zeigt in einer perspektivischen Ansicht einen Knoter einer Quaderballenpresse von an sich bekannter Bauart. Das Ende eines Bindegarnstrangs 1 ist an einer Klemmplatte 2 gehalten. Von der Klemmplatte 2 aus erstreckt sich ein Abschnitt 3 des Bindegarnstrangs 1 zunächst vor einem Knoterhaken 4 her zu einem Umlenkhaken 5 und von dort aus entlang der Oberseite, Vorderseite und Unterseite eines in der Figur nicht sichtbaren Pressgutballens in einem Presskanal der Ballenpresse. Wenn der Ballen fertiggestellt ist, rückt eine Bindenadel 6 entlang der Rückseite des Ballens quer durch den Presskanal hindurch zum Knoter vor, wobei sie den Bindegarnstrang 1 mit sich führt und dabei einen Abschnitt 8 des Bindegarnstrangs 1 an der Rückseite des Ballens platziert. Ein zweiter, mit einem Garnvorrat zusammenhängender Abschnitt 7 des Bindegarnstrangs 1 liegt an einer Außenseite der Bindenadel 6 an. Fig. 1 zeigt den Moment, in welchem die Spitze der Bindenadel 6 den Presskanal durchlaufen hat und den Knoter erreicht. Wenn sich die Bindenadel 6 über die in Fig. 1 gezeigte Position hinaus weiter aufwärts bewegt, kommt der von ihr mitgeführte Abschnitt 8 des Bindegarnstrangs 1 am Umlenkhaken 5 zur Anlage und wird schließlich an der Klemmplatte 2 geklemmt.

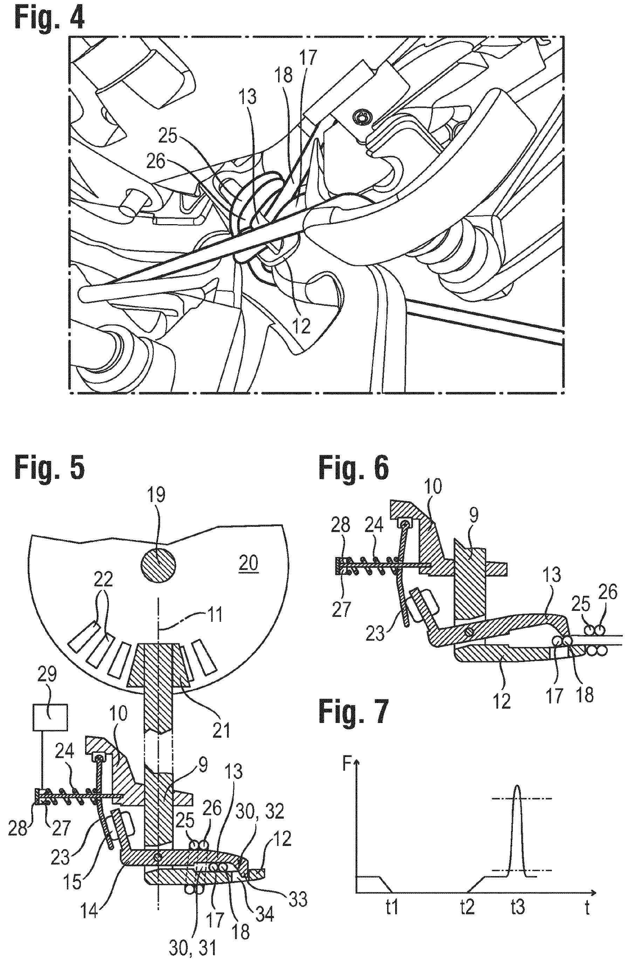

Der Knoterhaken 4 ist an der Spitze einer Welle 9 (siehe Fig. 5) befestigt, die in Fig. 1 in einem unbeweglichen Chassis 10 verborgen ist und eine in der Perspektive der Fig. 1 in etwa diagonal durch das Bild verlaufende Drehachse 11 definiert. Wenn der Knoterhaken 4 um die Drehachse 11 zu rotieren beginnt, nimmt er die Bindegarnabschnitte 3, 8 vom Umlenkhaken 5 ab und zieht sie mit sich, wie in Fig. 2 gezeigt. Gleichzeitig wird der Abschnitt 8 von der weiter vorrückenden Bindenadel 6 an der Klemmplatte 2 platziert und von dieser geklemmt.

In Fig. 2 erkennt man auch deutlich den Aufbau des Knoterhakens 4 mit an der Welle 9 festem Knoterbock 12 und einer schwenkbaren, an ihrem freien Ende einen Widerhaken tragenden Knoterzunge 13. Die Knoterzunge 13 bildet einen Arm eines sich durch die Welle 9 hindurch erstreckenden zweiarmigen Hebels, dessen zweiter Arm 14 eine Rolle 15 trägt.

In der Fig. 3 ist der Knoterhaken 4 um ca. 180 Grad weitergedreht. Die Rolle 15 gelangt hier in Kontakt mit einer Flanke 16 des Chassis 10. Wenn der Knoterhaken 4 weiter rotiert, wird die Rolle 15 an der Flanke 16 ausgelenkt, so dass die Knoterzunge 13, die in Fig. 3 weitgehend hinter Teilen 17, 18 der an der Klemmplatte 2 gehaltenen Garnabschnitte 3, 8 verborgen ist, von dem Knoterbock 12 fort ausgelenkt wird. Im Laufe der weiteren Drehung gelangen diese Garnabschnitte 17, 18 in den Spalt zwischen dem Knoterbock 12 und der nun von ihm fortbewegten Knoterzunge 13, und nachdem die Rolle 15 die Flanke 16 passiert hat, werden die Abschnitte 17, 18, wie in Fig. 4 gezeigt, zwischen Knoterzunge 13 und Knoterbock 12 geklemmt. Die Stellung des Knoterhakens ist nun im Wesentlichen dieselbe wie in Fig. 1. Die bei der Drehung des Knoterhakens 4 vom Umlenkhaken 5 abgenommenen Garnabschnitte 3, 8 bilden nun ferner zwei Schlaufen 25, 26, die sich um Knoterbock 12 und Knoterzunge 13 herum erstrecken.

Fig. 5 zeigt einen schematischen Schnitt durch den Knoter in dieser Phase des Knotvorgangs. Eine Knoterwelle 19 erstreckt sich quer zur Schnittebene und treibt die Welle 9 des Knoterhakens 4 über zwei zusammenwirkende Kegelräder 20, 21 an. Das Kegelrad 20 der Knoterwelle 19 ist nur auf einem Teil seines Unfangs mit Zähnen 22 versehen, so dass die Welle 9 nur auf einem Teil der Umdrehung der Knoterwelle 19 angetrieben wird.

Am Chassis 10 ist eine Platte 23 schwenkbar gelagert und berührt in der hier gezeigten Phase der Drehung des Knoterhakens die Rolle 15. Eine Feder 24 drückt die Platte 23 gegen die Rolle 15 und beaufschlagt so die Knoterzunge 13 gegen den Knoterbock 12, so dass die Garnabschnitte 17, 18 in einem Spalt 30 zwischen beiden geklemmt sind.

Der Spalt 30 hat einen zur Achse 11 benachbarten, breiten Abschnitt 31, durch den sich in der Phase der Fig. 5 die Garnabschnitte 17, 18 erstrecken, und einen achsfernen, engen Abschnitt 32, den die Garnabschnitte 17, 18 nicht durchlaufen können, ohne dass die Knoterzunge 13 vom Knoterbock abrückt. In diesem Abschnitt 32 greift der Widerhaken 33 der Knoterzunge 13 in eine Aussparung 34 des Knoterbocks 12 ein.

Die Spannung des um den Ballen geschlungenen Bindegarns zieht die Schlaufen 25, 26 vom Knoterhaken 4 ab. Nach Abgleiten vom Knoterhaken 4 ziehen sich die Schlaufen 25, 26 um die Garnabschnitte 17, 18 zu, wie in Fig. 6 gezeigt, und bilden so den gewünschten Knoten. Gleichzeitig ist nun die Knoterzunge 13 beweglich und kann dem auf die Garnabschnitte 17, 18 wirkenden Zug durch Schwenken nachgeben, wie ebenfalls in Fig. 6 gezeigt. Dabei wird die Platte 23 ausgelenkt und staucht die Feder 24. Die Rückstellkraft der Feder wirkt auch auf einen Kraftsensor 27, der hier zwischen einem von der Platte 23 abgewandten Ende der Feder 24 und einem am Chassis verankerten Stift 28 eingeklemmt ist.

Eine Auswerteschaltung 29 ist mit dem Ausgang des Kraftsensors 27 sowie den Ausgängen von Kraftsensoren anderer, von derselben Knoterwelle 19 angetriebener Knoterhaken verbunden. Fig. 7 zeigt den typischen Verlauf der vom Sensor 27 erfassten Kraft F im Laufe eines Knotvorgangs. Wie man oben gesehen hat, entfernt sich bei jedem Knotvorgang die Knoterzunge 13 zweimal vom Knoterbock 12, einmal, um die Garnabschnitte 17, 18 aufzunehmen, das zweite Mal, um sie wieder freizugeben. Da in der Orientierung des Knoterhakens 4, in der die Garnabschnitte 17, 18 aufgenommen werden, die Rolle 15 nicht in Kontakt mit der Platte 23 ist, wird diese Bewegung der Knoterzunge 13 vom Kraftsensor 27 nicht registriert. Zu beobachten ist stattdessen kurz nach Beginn der Drehung des Knoterhakens zur Zeit t1 eine Abnahme der Federkraft, wenn zunächst die Rolle 15 sich von der Platte 23 löst, ein Wiederanstieg, wenn gegen Ende der Drehung zur Zeit t2 die Rolle 15 wieder die Platte 23 erreicht und sie auslenkt, und kurz darauf zur Zeit t3 ein starker Anstieg, wenn die Knoterzunge 13 von den abgleitenden Garnabschnitten 17, 18 geschwenkt wird. Dieser kurzzeitige starke Anstieg muss von allen Sensoren der Ballenpresse erfasst werden; wenn an einem Sensor der Kraftanstieg auftritt, an einem anderen aber nicht, dann zeigt dies, dass an einem Knoterhaken das Garn nicht ordnungsgemäß freigegeben worden ist. In diesem Fall kann die Auswerteschaltung 29 ein Anzeigeinstrument betätigen, um den Fahrer der Ballenpresse zu veranlassen, die Presse anzuhalten und die Störung zu beseitigen. Alternativ oder ergänzend kann vorgesehen werden, dass die Auswerteschaltung 29 einen Antrieb der Ballenpresse unterbricht, um eine Ansammlung von Bindegarn an dem gestörten Knoterhaken zu verhindern. Eine solche Unterbrechung kann beispielsweise an einer Kupplung zwischen der Knoterwelle 19 und einem Antriebsmotor der Ballenpresse stattfinden, so dass im Störungsfall keine weiteren Knotversuche unternommen werden. Alternativ kann auch der Antrieb einer Fördervorrichtung, die Pressgut dem Presskanal zuführt, unterbrochen werden. Da somit kein neuer Ballen entsteht, kann es auch zu keinem neuerlichen Knotversuch mit dem gestörten Knoterhaken kommen. Da im Anschluss an den Ballen, dessen Verknotung zur Störung geführt hat, kein neues Pressgut in den Presskanal gelangt, erschwert auch kein ungebundenes Pressgut eine eventuell nötige Neuverlegung des Bindegarnstrangs. Eine ähnliche Wirkung kann auch durch Unterbrechen des Fahrantriebs der Ballenpresse erreicht werden, da sie im Stillstand kein frisches Pressgut aufnehmen kann.

### Bezugszeichen

- 1: Bindegarnstrang
- 2: Klemmplatte
- 3: Abschnitt des Bindegarnstrangs 1
- 4: Knoterhaken
- 5: Umlenkhaken
- 6: Bindenadel
- 7: Abschnitt des Bindegarnstrangs 1
- 8: Abschnitt des Bindegarnstrangs 1
- 9: Welle
- 10: Chassis
- 11: Drehachse
- 12: Knoterbock
- 13: Knoterzunge
- 14: Arm
- 15: Rolle
- 16: Flanke
- 17: Garnabschnitt
- 18: Garnabschnitt
- 19: Knoterwelle
- 20: Kegelrad
- 21: Kegelrad
- 22: Zahn
- 23: Platte
- 24: Feder
- 25: Schlaufe
- 26: Schlaufe
- 27: Kraftsensor
- 28: Stift
- 29: Auswerteschaltung
- 30: Spalt
- 31: breiter Abschnitt
- 32: enger Abschnitt
- 33: Widerhaken
- 34: Aussparung

## Patentansprüche

1. Knoter, insbesondere für eine landwirtschaftliche Ballenpresse, mit wenigstens einem um eine Achse (11) drehbaren Knoterhaken (4), der einen Knoterbock (12) und eine zum Klemmen von Bindegarn (1) gegen den Knoterbock (12) bewegliche Knoterzunge (13) umfasst, sowie mit einem die Position der Knoterzunge (13) relativ zum Knoterbock (12) überwachenden Sensor (27), wobei die Knoterzunge (13) gegen die Rückstellkraft einer Feder (24) beweglich ist, **dadurch gekennzeichnet, dass** der Sensor (27) ein der Rückstellkraft ausgesetzter Kraftsensor ist.

2. Knoter nach Anspruch 1, **dadurch gekennzeichnet, dass** der Knoterbock (12) und die Knoterzunge (13) einen Klemmspalt (30) begrenzen, der in einem zur Achse (11) benachbarten Abschnitt (31) breiter ist als in einem von der Achse entfernten Abschnitt (32).

3. Knoter nach Anspruch 1, oder 2, **dadurch gekennzeichnet, dass** der Sensor (27) an einem Chassis (10), an dem der Knoterhaken (4) drehbar gelagert ist, drehfest montiert ist.

4. Knoter nach Anspruch 1, 2 oder 3, **dadurch gekennzeichnet, dass** der Sensor (27) mechanisch an die Knoterzunge (13) gekoppelt ist.

5. Knoter nach Anspruch 1, **dadurch gekennzeichnet, dass** die Feder (24) drehfest angeordnet und nur in einer Ruheorientierung des Knoterhakens (4) an die Knoterzunge (13) gekoppelt ist.

6. Knoter nach einem der vorhergehenden Ansprüche, **gekennzeichnet durch** eine Auswerteschaltung (29), die mit dem Sensor (27) verbunden ist, um ein eine Fehlknotung anzeigendes Ausgangssignal zu liefern.

7. Knoter nach Anspruch 6, **dadurch gekennzeichnet, dass** die Auswerteschaltung einen Eingang für ein die Stellung einer Antriebswelle des Knoters anzeigendes Signal hat.

8. Knoter nach Anspruch 6, **dadurch gekennzeichnet, dass** die Auswerteschaltung (29) mit den Sensoren (27) mehrerer Knoterhaken (4) verbunden ist und eingerichtet ist, eine Fehlknotung anhand eines Vergleichs der Signale der mehreren Sensoren (27) festzustellen.

9. Ballenpresse mit wenigstens einem Knoter nach Anspruch 6, 7 oder 8 .

10. Ballenpresse nach Anspruch 9, **gekennzeichnet durch** ein Anzeigeinstrument für das Ausgangssignal.

11. Ballenpresse nach Anspruch 9 oder 10, **gekennzeichnet durch** eine Steuereinrichtung zum Unterbrechen eines Antriebs, insbesondere des Knoters, eines Presskolbens, und/oder einer Pressgutfördereinrichtung in Abhängigkeit von dem Ausgangssignal.

## Claims

1. A knotter, in particular for an agricultural bale press, comprising at least one knotter hook (4) which is rotatable about an axis (11) and which includes a knotter dog (12) and a knotter tongue (13) which is moveable against the knotter dog (12) for clamping binding twine (1), and a sensor (27) for monitoring the position of the knotter tongue (13) relative to the knotter dog (12), wherein the knotter tongue (13) is moveable against the return force of a spring (24), **characterised in that** the sensor (27) is a force sensor which is subjected to the return force.

2. A knotter according to claim 1 **characterised in that** the knotter dog (12) and the knotter tongue (13) delimit a clamping gap (30) which is wider in a portion (31) adjacent to the axis (11) than in a portion (32) remote from the axis.

3. A knotter according to claim 1 or claim 2 **characterised in that** the sensor (27) is non-rotatably mounted to a chassis (10) to which the knotter hook (4) is rotatably mounted.

4. A knotter according to claim 1, claim 2 or claim 3 **characterised in that** the sensor (27) is mechanically coupled to the knotter tongue (13).

5. A knotter according to claim 1 **characterised in that** spring (24) is arranged non-rotatably and is coupled to the knotter tongue (13) only in a rest orientation of the knotter hook (4).

6. A knotter according to one of the preceding claims **characterised by** an evaluation circuit (29) connected to the sensor (27) to produce an output signal indicating incorrect knotting.

7. A knotter according to claim 6 **characterised in that** the evaluation circuit has an input for a signal indicating the position of a drive shaft of the knotter.

8. A knotter according to claim 6 **characterised in that** the evaluation circuit (29) is connected to the sensors (27) of a plurality of knotter hooks (4) and is adapted to detect incorrect knotting on the basis of a comparison between the signals of the plurality of sensors (27).

9. A bale press having at least one knotter according to claim 6, claim 7 or claim 8.

10. A bale press according to claim 9 **characterised by** a display instrument for the output signal.

11. A bale press according to claim 9 or claim 10 **characterised by** a control device for interrupting a drive, in particular of the knotter, a pressing piston and/or a pressing material conveyor device in dependence on the output signal.

## Revendications

1. Noueur, en particulier pour une presse agricole à balles, comprenant au moins un bec noueur (4) qui peut tourner autour d'un axe (11) et qui comprend un corps de noueur (12) et une languette de noueur mobile (13) pour serrer de la ficelle (1) contre le corps de noueur (12), ainsi que comprenant un capteur (27) qui surveille la position de la languette de noueur (13) par rapport au corps de noueur (12), la languette de noueur (13) étant mobile à l'encontre de la force de rappel d'un ressort (24), **caractérisé en ce que** le capteur (27) est un capteur de force exposé à la force de rappel.

2. Noueur selon la revendication 1, **caractérisé en ce que** le corps de noueur (12) et la languette de noueur (13) délimitent un intervalle de serrage (30) qui est plus large dans une portion (31) voisine de l'axe (11) que dans une portion (32) éloignée de l'axe.

3. Noueur selon la revendication 1, ou 2, **caractérisé en ce que** le capteur (27) est monté solidaire en rotation sur un châssis (10) sur lequel le bec noueur (4) est monté à rotation.

4. Noueur selon la revendication 1, 2 ou 3, **caractérisé en ce que** le capteur (27) est couplé mécaniquement à la languette de noueur (13).

5. Noueur selon la revendication 1, **caractérisé en ce que** le ressort (24) est disposé solidaire en rotation et n'est couplé à la languette de noueur (13) que dans une orientation de repos du bec noueur (4).

6. Noueur selon une des revendications précédentes, **caractérisé par** un circuit d'analyse (29) qui est relié au capteur (27) afin de fournir un signal de sortie indiquant un nouage défectueux.

7. Noueur selon la revendication 6, **caractérisé en ce que** le circuit d'analyse possède une entrée pour un signal indiquant la position d'un arbre d'entraînement du noueur.

8. Noueur selon la revendication 6, **caractérisé en ce que** le circuit d'analyse (29) est relié aux capteurs (27) de plusieurs becs noueurs (4) et est agencé pour constater un nouage défectueux sur la base d'une comparaison des signaux des plusieurs capteurs (27).

9. Presse à balles comprenant au moins un noueur selon la revendication 6, 8 ou 8.

10. Presse à balles selon la revendication 9, **caractérisée par** un instrument de visualisation du signal de sortie.

11. Presse à balles selon la revendication 9 ou 10, **caractérisée par** un dispositif de commande pour interrompre un entraînement, en particulier du noueur, d'un piston de presse et/ou d'un dispositif d'amenée de fourrage en fonction du signal de sortie.
